# EUROPÄISCHE PATENTSCHRIFT

(11) **EP 3 074 126 B1**
(45) Veröffentlichungstag und Bekanntmachung des Hinweises auf die Patenterteilung: **02.05.2018**
(21) Anmeldenummer: 14799804.1
(22) Anmeldetag: 19.11.2014
(51) Int. Cl.: B01J 37/02, B01J 35/00, B01J 21/06, B01J 23/30, B01J 35/04, B01J 35/10, B01D 53/94

(54) **SCR-KATALYSATOR UND VERFAHREN ZUR VERMINDERUNG VON STICKOXIDEN IN ABGASEN**
SCR CATALYTIC CONVERTER AND PROCESSES FOR REDUCICING NOX IN EXHAUST GASES
CATALYSEUR RCS ET PROCÉDÉS POUR DIMINUER D'ÉMISSION DE NOX

(30) Priorität: 25.11.2013 EP 13194249
(43) Veröffentlichungstag der Anmeldung: 05.10.2016
(73) Patentinhaber: Umicore AG & Co. KG, 63457 Hanau-Wolfgang (DE)
(72) Erfinder: MALMBERG, Stephan, 60389 Frankfurt (DE); SOEGER, Nicola, 61130 Nidderau (DE); DEMEL, Yvonne, 63674 Altenstadt (DE); JESKE, Gerald, 63543 Neuberg (DE)
(86) Internationale Anmeldenummer: PCT/EP2014/075048
(87) Internationale Veröffentlichungsnummer: WO 2015/075083

(56) Entgegenhaltungen:
- DE-A1-102012 213 639
- US-A1- 2012 087 835
- US-A1- 2013 205 743

## Beschreibung

Die vorliegende Erfindung betrifft einen ein Oxid des Vanadiums enthaltenden SCR-Katalysator.

Das Abgas von Kraftfahrzeugen, die mit mager betriebenen Verbrennungsmotoren, beispielsweise Dieselmotoren, ausgestattet sind, enthält Kohlenmonoxid (CO) und Stickoxide (NOₓ), sowie Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Russpartikel" bezeichnet. Dabei handelt es sich um komplexe Agglomerate aus überwiegend Kohlenstoff-haltigen Feststoffteilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

So können Kohlenmonoxid (CO), gasförmige Kohlenwasserstoffe (HC) und gegebenenfalls den Russpartikeln anhaftende organische Agglomerate (sog. "Volatile Organic Fraction" VOF) mit Hilfe von Oxidationskatalysatoren oxidativ entfernt werden.

Zur Entfernung von Partikelemissionen werden Partikelfilter eingesetzt. Partikelfilter sind in der Regel Wandflussfiltersubstrate, also Wabenkörper mit wechselseitig gasdicht verschlossenen An- und Abströmkanälen, die durch poröse Wände begrenzt und voneinander abgetrennt sind. Das in die Anströmkanäle einströmende partikelhaltige Abgas wird durch einen auf der Austrittsseite befindlichen gasdichten Verschlussstopfen zum Durchtritt durch die poröse Wand gezwungen und tritt aus den auf der Anströmseite verschlossenen Abströmkanälen aus dem Wandflussfiltersubstrat wieder aus. Dabei wird Dieselruß aus dem Abgas herausgefiltert.

Eine Möglichkeit zur Entfernung der Stickoxide bietet der Einsatz von Stickoxid-Speicherkatalysatoren. Deren Reinigungswirkung beruht darauf, dass in der mageren Betriebsphase des Motors die Stickoxide vom Speichermaterial des Speicherkatalysators vorwiegend in Form von Nitraten gespeichert werden und diese in einer darauf folgenden kurzen fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Ein weiteres bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak an einem geeigneten Katalysator, dem SCR-Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann als Sekundäremission in der Abgasanlage erzeugt werden oder es wird durch Eindosierung einer Vorläuferverbindung, aus der Ammoniak gebildet werden kann, wie beispielsweise Harnstoff, Ammoniumcarbamat oder Ammoniumformiat, in den Abgasstrang und anschließende Hydrolyse verfügbar gemacht.

Zur Durchführung der letztgenannten Variante des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig.

Als SCR-Katalysatoren kommen beispielsweise Mischoxide zum Einsatz, die insbesondere auf Titandioxid und/oder Oxiden des Vanadiums, zum Beispiel Vanadiumpentoxid, basieren und die weitere Oxide enthalten können, etwa solche des Siliziums, des Molybdäns, des Mangans, des Wolframs und anderen. Diese Katalysatoren sind in der Literatur ausführlich beschrieben, siehe beispielsweise WO89/03366 A1, EP 0 345 695 A2, EP 0 385 164 A2, WO2011/013006 A2 und US2013/205743.

Da Verbrennungsmotoren im Kraftfahrzeug in transienten Fahrzyklen betrieben werden, muss der SCR-Katalysator auch bei stark schwankenden Betriebsbedingungen möglichst hohe Stickoxidumsätze bei guter Selektivität gewährleisten. Es soll also eine vollständige und selektive Konvertierung der anfallenden Stickoxidmengen bei niedrigen Temperaturen ebenso sichergestellt sein wie bei hohen Temperaturen, wie sie beispielsweise bei Volllastfahrten auftreten.

Der bisherige Stand der Technik erlaubt es aber nicht, Vanadium-SCR-Katalysatoren gleichzeitig hinsichtlich Tieftemperaturaktivität (T < 250°C) und Hochtemperaturselektivität (T ≥ 500°C) zu optimieren. Eine Verbesserung der Tieftemperaturaktivität ist stets mit Einbußen bei der Hochtemperaturselektivität verbunden und umgekehrt.

Gerade nach solchen Katalysatoren besteht aber erhöhter Bedarf am Markt. Aufgabe vorliegender Erfindung ist es somit, Vanadium-SCR-Katalysatoren bereitzustellen, die sich durch gute Tieftemperaturaktivität bei gleichzeitig hoher Hochtemperaturselektivität auszeichnen.

Diese Aufgabe wird gelöst durch einen Katalysator zur selektiven Reduktion von Stickoxiden, umfassend zwei katalytisch aktive Schichten A und B, wobei
A ein Trägeroxid, sowie die Komponenten A1 und A2 und
B ein Trägeroxid, sowie die Komponenten B1, B2 und B3,
enthält, wobei
A1 und B1 für mindestens ein Oxid des Vanadiums,
A2 und B2 für mindestens ein Oxid des Wolframs und
B3 für mindestens ein Oxid des Siliziums
stehen, dadurch gekennzeichnet, dass
- der Anteil an Komponente A1 in Schicht A in Gew.-% bezogen auf das Gesamtgewicht der Schicht A größer ist als der Anteil an Komponente B1 in Schicht B in Gew.-% bezogen auf das Gesamtgewicht der Schicht B und
- der Anteil der Schicht A in Gew.-% bezogen auf das Gesamtgewicht der Schichten A und B größer ist als der Anteil der Schicht B.

In einer Ausführungsform der vorliegenden Erfindung enthält Schicht A neben den Komponenten A1 und A2 auch eine Komponente A3, wobei A3 für mindestens ein Oxid des Siliziums steht und wobei der Anteil an Komponente A3 in Schicht A in Gew.-% bezogen auf das Gesamtgewicht der Schicht A kleiner ist als der Anteil der Komponente B3 in Schicht B in Gew.-% bezogen auf das Gesamtgewicht der Schicht B.

Je nach Betriebszustand des erfindungsgemäßen Katalysators können die Komponenten A1 bis A3 und B1 bis B3 in verschiedenen oxidischen Formen vorliegen. Zu den Parametern, die die jeweilige oxidische Form bestimmen, gehören beispielsweise die Konzentration der einzelnen Bestandteile, die Temperatur und die Sauerstoffkonzentration, der der Katalysator ausgesetzt ist. Aber auch das Herstellungsverfahren des erfindungsgemäßen Katalysators kann Einfluss haben.

In der Regel liegen Vanadium als Vanadiumpentoxid, Wolfram als Wolframtrioxid und Silizium als Siliziumdioxid vor. Je nach Sauerstoffkonzentration können Vanadium, Wolfram und Silizium aber auch in höheren oder niedrigeren Oxidationsstufen vorliegen. Es ist darüber hinaus auch möglich, dass alle oxidischen Bestandteile der Schicht A und/oder alle oxidischen Bestandteile der Schicht B eine feste Lösung bilden, in der Oxide der einzelnen Elemente nicht mehr unterschieden werden können. Für die Wirksamkeit als SCR-Katalysator ist dies aber allenfalls von nachgeordneter Bedeutung und hat keinen größeren Einfluss auf die katalytische Aktivität.

Im Übrigen ist der Fachmann in der Lage, mittels geeigneter Analyseverfahren die jeweils vorliegende Form der erfindungsgemäßen Katalysatoren festzustellen.

In einer Ausführungsform des erfindungsgemäßen Katalysators umfasst er mindestens zwei katalytisch aktive Schichten A und B, wobei A ein Trägeroxid, Vanadiumpentoxid als Komponente A1 und Wolframtrioxid als Komponente A2 und

B ein Trägeroxid, Vanadiumpentoxid als Komponente B1, Wolframtrioxid als Komponente B2 und Siliziumdioxid als Komponente B3
enthalten, dadurch gekennzeichnet, dass
• der Anteil an Vanadiumpentoxid in Schicht A in Gew.-% bezogen auf das Gesamtgewicht der Schicht A größer ist als der Anteil an Vanadiumpentoxid in Schicht B in Gew.-% bezogen auf das Gesamtgewicht der Schicht B und
• der Anteil der Schicht A in Gew.-% bezogen auf das Gesamtgewicht der Schichten A und B größer ist als der Anteil der Schicht B.

In einer weiteren Ausführungsform des erfindungsgemäßen Katalysators ist der Anteil an Komponente A2 in Schicht A und an Komponente B2 in Schicht B in Gew.-% jeweils bezogen auf das Gesamtgewicht der Schicht A bzw. B gleich oder der Anteil an Komponente A2 in Schicht A in Gew.-% bezogen auf das Gesamtgewicht der Schicht A ist kleiner als der Anteil an Komponente B2 in Schicht B in Gew.-% bezogen auf das Gesamtgewicht der Schicht B.

Die Schichten A und B können unabhängig voneinander weitere Komponenten A4 bzw. B4 enthalten, wobei
A4 für ein oder mehrere Metalloxide steht, die ausgewählt sind aus der Reihe bestehend aus Oxiden des Kupfers, Eisens, Mangans, Molybdäns, Antimons, Niobs, Silbers, Palladiums, Platins und der Seltenerdelemente und
B4 unabhängig von A4 für ein oder mehrere Metalloxide steht, die ausgewählt sind aus der Reihe bestehend aus Oxiden des Kupfers, Eisens, Mangans, Molybdäns, Antimons, Niobs, Silbers und der Seltenerdelemente.

Wie für die Komponenten A1 bis A3 und B1 bis B3 kann auch die oxidische Form der Komponenten A4 und B4 unterschiedlich sein und hängt wie oben beschrieben vom Betriebszustand des erfindungsgemäßen Katalysators und von seinem Herstellungsverfahren ab. Metalle wie Silber, Palladium und Platin können darüber hinaus je nach Betriebszustand auch in metallischer Form vorliegen. Die oben gewählte Formulierung Oxide des Silbers, Platins und Palladiums umfasst also für die Zwecke der vorliegenden Erfindung auch die jeweiligen Metalle selbst.

Sofern der erfindungsgemäße Katalysator die Komponente A4 und B4 enthält und diese für ein Oxid eines Seltenerdelementes stehen, so ist insbesondere der Anteil an Seltenerdoxid in Schicht A in Gew.-% bezogen auf das Gesamtgewicht der Schicht A kleiner ist als der Anteil an Seltenerdoxid in Schicht B in Gew.-% bezogen auf das Gesamtgewicht der Schicht B.

Bevorzugte Seltenerdelemente sind Lanthan, Cer, Praseodym, Neodym, Samarium, Gadolinium, Terbium, Dysprosium, Erbium und Yttrium.

Sofern der erfindungsgemäße Katalysator die Komponenten A4 und B4 enthält und diese für ein Oxid des Kupfers, Eisens, Mangans, Molybdäns, Niobs oder Silbers stehen, so ist insbesondere der Anteil an Oxiden des Kupfers, Eisens, Mangans, Molybdäns, Niobs oder Silbers in Schicht A in Gew.-% bezogen auf das Gesamtgewicht der Schicht A größer als der Anteil an Oxiden des Kupfers, Eisens, Mangans, Molybdäns, Antimons, Niobs oder Silbers in Schicht B in Gew.-% bezogen auf das Gesamtgewicht der Schicht B.

In einer Ausführungsform des erfindungsgemäßen Katalysators enthält er die Komponente A4, aber nicht die Komponente B4.

In diesem Fall beträgt der Anteil der Komponente A4, bezogen auf das Gesamtgewicht der Schicht A 0,1 bis 15 Gew.-%, wobei im Falle von Silber, Platin und Palladium der Anteil jeweils als Metall berechnet ist, und im Falle der übrigen Komponenten der Anteil jeweils als Oxid berechnet ist und zwar als CuO, Fe₂O₃, MnO, MoO₃, Sb₂O₅, Nb₂O₅, CeO₂ bzw. Er₂O₃.

Mit besonderem Vorteil kann Platin in Schicht A eingesetzt werden. Aufgrund seiner oxidationskatalytischen Wirksamkeit ist Platin nämlich in der Lage, über die SCR-Reaktion nicht umgesetztes Ammoniak zu oxidieren und somit seine Freisetzung in die Umwelt zu verhindern. Auch weitere oxidationsaktive Oxide, beispielsweise solche des Kupfers, Mangans und Silbers, können diesen Effekt aufweisen.

In einer Ausführungsform der vorliegenden Erfindung beträgt der Anteil der Komponente A1 berechnet als Vanadiumpentoxid 1,5 bis 5 Gew.-%, insbesondere 2 bis 4 Gew.-%, bezogen auf das Gesamtgewicht der Schicht A.

In einer weiteren Ausführungsform der vorliegenden Erfindung beträgt der Anteil der Komponente B1 berechnet als Vanadiumpentoxid 1 bis 4 Gew.-%, insbesondere 1,5 bis 3,5 Gew.-%, bezogen auf das Gesamtgewicht der Schicht B.

In einer weiteren Ausführungsform der vorliegenden Erfindung sind der Anteil an Komponente A2, bezogen auf das Gesamtgewicht der Schicht A und der Anteil an Komponente B2, bezogen auf das Gesamtgewicht der Schicht B, gleich. In diesem Fall beträgt der Anteil berechnet als Wolframtrioxid insbesondere 3 bis 12, bevorzugt 4,5 bis 10 Gew.-%.

Im Fall, dass der Anteil an Komponente A2, bezogen auf das Gesamtgewicht der Schicht A kleiner ist als der Anteil an Komponente B2, bezogen auf das Gesamtgewicht der Schicht B, so beträgt dieser berechnet als Wolframtrioxid insbesondere 3 bis 5,5, bevorzugt 4,5 bis 5 Gew.-%. Der Anteil an Komponente B2, bezogen auf das Gesamtgewicht der Schicht B, beträgt dann insbesondere 4,5 bis 12, bevorzugt 5 bis 10 Gew.%.

Der Anteil an Komponente B3 beträgt, bezogen auf das Gesamtgewicht der Schicht B und berechnet als Siliziumdioxid, insbesondere 3 bis 12, bevorzugt 3,5 bis 10 Gew.-%.

Der Anteil der Komponente A3 beträgt, bezogen auf das Gesamtgewicht der Schicht A und berechnet als Siliziumdioxid, bevorzugt 0 bis 5 Gew.-%. Sofern die Komponente A3 vorliegt, so beträgt ihr Anteil, bezogen auf das Gesamtgewicht der Schicht A und berechnet als Siliziumdioxid, besonders bevorzugt 1 bis 5 Gew.-%.

Sofern die Komponenten A4 oder B4 vorliegen, so beträgt ihr Anteil, bezogen auf das Gesamtgewicht der Schicht A bzw. der Schicht B, insbesondere 0,1 bis 15 Gew.%. Diese Angaben sind mit Ausnahme von Silber, Platin und Palladium, deren Anteil jeweils als Metall berechnet ist, auf den Anteil der Oxide CuO, Fe₂O₃, MnO, MoO₃, Sb₂O₅, Nb₂O₅, CeO₂, Er₂O₃ usw. berechnet.

In einer weiteren Ausführungsform der vorliegenden Erfindung
- beträgt der Anteil der Komponente A1 berechnet als Vanadiumpentoxid 1,5 bis 5 Gew.-%, bezogen auf das Gesamtgewicht der Schicht A und
- beträgt der Anteil der Komponente B1 berechnet als Vanadiumpentoxid 1 bis 4 Gew.-%, bezogen auf das Gesamtgewicht der Schicht B,
- sind der Anteil an Komponente A2, bezogen auf das Gesamtgewicht der Schicht A und der Anteil an Komponente B2, bezogen auf das Gesamtgewicht der Schicht B, gleich und betragen, berechnet als Wolframtrioxid, 3 bis 12 Gew.-% oder
   der Anteil an Komponente A2, bezogen auf das Gesamtgewicht der Schicht A, ist kleiner ist als der Anteil an Komponente B2, bezogen auf das Gesamtgewicht der Schicht B, und beträgt berechnet als Wolframtrioxid 3 bis 5,5 Gew.-%, wobei der Anteil an Komponente B2, bezogen auf das Gesamtgewicht der Schicht B, dann 4,5 bis 12 Gew.% beträgt, und
- beträgt der Anteil an Komponente B3, bezogen auf das Gesamtgewicht der Schicht B und berechnet als Siliziumdioxid 3 bis 12 Gew.-%, wobei die Komponente A3 nicht vorliegt oder ihr Anteil, bezogen auf das Gesamtgewicht der Schicht A und berechnet als Siliziumdioxid, 1 bis 5 Gew.-% beträgt.

In einer weiteren Ausführungsform der vorliegenden Erfindung
- beträgt der Anteil der Komponente A1 berechnet als Vanadiumpentoxid 2 bis 4 Gew.-%, bezogen auf das Gesamtgewicht der Schicht A und
- beträgt der Anteil der Komponente B1 berechnet als Vanadiumpentoxid 1,5 bis 3,5 Gew.-%, bezogen auf das Gesamtgewicht der Schicht B,
- sind der Anteil an Komponente A2, bezogen auf das Gesamtgewicht der Schicht A und der Anteil an Komponente B2, bezogen auf das Gesamtgewicht der Schicht B, gleich und betragen, berechnet als Wolframtrioxid, 4,5 bis 10 Gew.-% oder
   der Anteil an Komponente A2, bezogen auf das Gesamtgewicht der Schicht A, kleiner ist als der Anteil an Komponente B2, bezogen auf das Gesamtgewicht der Schicht B, und beträgt berechnet als Wolframtrioxid 4,5 bis 5 Gew-%, wobei der Anteil an Komponente B2, bezogen auf das Gesamtgewicht der Schicht B, dann 5 bis 10 Gew.% beträgt, und
- beträgt der Anteil an Komponente B3, bezogen auf das Gesamtgewicht der Schicht B und berechnet als Siliziumdioxid 3,5 bis 10 Gew.-%, wobei die Komponente A3 nicht vorliegt oder ihr Anteil, bezogen auf das Gesamtgewicht der Schicht A und berechnet als Siliziumdioxid, 1 bis 5 Gew.-% beträgt.

In Ausführungsformen des erfindungsgemäßen Katalysators ist das Trägeroxid in Schicht A und/oder B Titandioxid, Zirkoniumdioxid und/oder Aluminiumoxid. Insbesondere ist das Trägeroxid in Schicht A und B Titandioxid. Bevorzugtes Titandioxid liegt zu mindestens 95% in der Anatas-Modifikation und zu maximal 5% in der Rutil-Modifikation vor. Seine BET-Oberfläche ist insbesondere größer als 80 m²/g und beträgt beispielsweise 80 bis 250 m²/g.

Der Anteil an Trägeroxid in Gew.% bezogen auf die jeweilige Schicht ergibt sich in einfacher Weise als Differenz der Summe der Anteile der übrigen Bestandteile, also etwa A1, A2, A3 und A4 bzw. B1, B2, B3 und B4 und 100. Erfindungsgemäß ist der Anteil der Schicht A in Gew.-% bezogen auf das Gesamtgewicht der Schichten A und B größer ist als der Anteil der Schicht B.

In Ausführungsformen der vorliegenden Erfindung beträgt der Anteil der Schicht B 12,5 bis 25% bezogen auf das Gesamtgewicht der Schichten A und B.

Insbesondere werden Schicht A in Mengen von 100 bis 220, bevorzugt 120 bis 210 g/l, und Schicht B in Mengen von 14 bis 75 g/l, jeweils bezogen auf das Volumen des Trägersubstrates, eingesetzt.

Die Schichten A und B des erfindungsgemäßen Katalysators sind vorteilhafterweise auf einen katalytisch inerten Tragkörper aus keramischem oder metallischem Material aufgebracht, der ein erstes Ende a, ein zweites Ende b und eine Länge L besitzt, die sich zwischen den Enden a und b erstreckt.

Dabei kann der katalytisch inerte Tragkörper ein Durchflusswabenkörper oder ein Wandflussfilter sein. Sofern als katalytisch inerter Tragkörper ein Wandflussfilter verwendet wird, kann der erfindungsgemäße Katalysator als mit einer SCR-aktiven Beschichtung versehenes Dieselpartikelfilter verwendet werden.

Die Anordnung der Schichten A und B auf dem katalytisch inerten Tragkörper kann verschieden sein. Insbesondere sind sie aber so angeordnet, dass bei der bestimmungsgemäßen Verwendung der erfindungsgemäße Katalysator so in das Kraftfahrzeug eingebaut werden kann, dass Schicht B mit dem zu reinigenden Abgas vor Schicht A in Berührung kommt.

So wird beispielsweise Schicht A direkt auf den inerten Tragkörper über dessen gesamte Länge und Schicht B auf Schicht A aufgebracht sein und diese abgasseitig vollständig überdecken.

In einer weiteren Ausführungsform kann Schicht A ausgehend von Ende a des katalytisch inerten Tragkörpers auf eine Länge La und Schicht B ausgehend von Ende b des katalytisch inerten Tragkörpers auf eine Länge Lb aufgetragen sein, wobei La 50 bis 75% und Lb 25 bis 50% der Länge L betragen und La + Lb = L ist.

In einer weiteren Ausführungsform können Schicht A und Schicht B auf zwei verschiedenen, hintereinander angeordneten katalytisch inerten Tragkörpern aufgebracht sein. In diesem Fall befindet sich bei der bestimmungsgemäßen Verwendung des erfindungsgemäßen Katalysators der die Schicht B tragende katalytisch inerte Tragkörper insbesondere anströmseitig zu dem die Schicht A tragenden katalytisch inerten Tragkörper.

Schließlich ist es auch möglich, die Schichten A und B nicht auf einen katalytisch inerten Tragkörper aufzubringen, sondern Schicht A in Form eines extrudierten Trägerkörpers auszubilden, auf den Schicht B in Form einer Beschichtung aufgetragen ist.

Die Aufbringung der Schichten A und B auf den katalytisch inerten Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Der erfindungsgemäße Katalysator eignet sich in hervorragender Weise zur Verminderung von Stickoxiden in Abgasen von mager betriebenen Verbrennungsmotoren, insbesondere Dieselmotoren.

Die vorliegende Erfindung betrifft somit auch ein Verfahren zur Verminderung von Stickoxiden in Abgasen von mager betriebenen Verbrennungsmotoren umfassend die Verfahrensschritte
- Zugabe eines Reduktionsmittels zum Stickoxide enthaltenden Abgas und
- Überleitung des resultierenden Gemisches aus Stickoxide enthaltendem Abgas und Reduktionsmittel über einen erfindungsgemäßen Katalysator,
- wobei der Katalysator so angeordnet ist, dass das Gemisch aus Stickoxide enthaltendem Abgas und Reduktionsmittel zuerst mit Schicht B in Berührung kommt.

Als Reduktionsmittel kommt insbesondere Ammoniak in Frage, wobei mit besonderem Vorteil zum Stickoxide enthaltenden Abgas nicht Ammoniak selbst, sondern ein Ammoniak-Precursor, insbesondere Harnstoff, zugegeben wird.

Als Reduktionsmittel können aber auch Kohlenwasserstoffe verwendet werden (sog. HC-deNOx-Verfahren), wobei die Kohlenwasserstoffe dem Stickoxide enthaltenden Abgas zudosiert werden können oder wobei die Kohlenwasserstoffe im Abgasstrom gebildet werden können (sog. Passives HC-deNOx-Verfahren). Die verschiedenen Verfahren bzw. die verschiedenen Reduktionsmittel sind dem Fachmann bekannt und sind in der Literatur ausführlich beschrieben.

Insbesondere wird der erfindungsgemäße Katalysator als Bestandteil eines Abgasreinigungssystems verwendet, das beispielsweise neben dem erfindungsgemäßen Katalysator einen anströmseitig angeordneten Oxidationskatalysator und ein Dieselpartikelfilter umfasst. Dabei kann der erfindungsgemäße Katalysator auch als Beschichtung auf dem Dieselpartikelfilter vorliegen.

Die vorliegende Erfindung betrifft somit auch ein Abgasreinigungssystem zur Behandlung von Dieselabgas, das in Strömungsrichtung des Abgases
- einen Oxidationskatalysator,
- ein Dieselpartikelfilter und
- einen erfindungsgemäßen Katalysator
oder
- einen Oxidationskatalysator und
- ein Dieselpartikelfilter, auf dem ein erfindungsgemäßer Katalysator als Beschichtung vorliegt
umfasst, wobei der erfindungsgemäße Katalysator so angeordnet ist, dass das Stickoxide enthaltende Abgas und zuerst mit Schicht B in Berührung kommt.

Für das erfindungsgemäße Abgasreinigungssystem geeignete Oxidationskatalysatoren und Dieselpartikelfiltern sind dem Fachmann bekannt und am Markt erhältlich.

In der Regel umfasst das erfindungsgemäße Abgasreinigungssystem eine anströmseitig zum erfindungsgemäßen Katalysator angeordnete Vorrichtung zum Eindosieren von Ammoniak bzw. einer Verbindung, aus der Ammoniak gebildet wird, beispielsweise Harnstoff.

Die vorliegende Erfindung betrifft weiterhin ein Verfahren zur Verminderung von Stickoxiden in Abgasen von mager betriebenen Verbrennungsmotoren, insbesondere Dieselmotoren, das dadurch gekennzeichnet ist, dass das Abgas über ein erfindungsgemäßes Abgasreinigungssystem geleitet wird.

### Beispiele 1 bis 8

### Herstellung von Katalysatorpulvern:

### A) Katalysatorpulver A der Zusammensetzung

87,8 Gew.-% TiO₂ als Träger, 2,2 Gew.-% V₂O₅ und 10 Gew.-% WO₃;
wurde wie folgt hergestellt:
Kommerziell erhältliches Titandioxid (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### B) Katalysatorpulver B der Zusammensetzung

87,8 Gew.-% TiO₂ als Träger, 2,2 Gew.-% V₂O₅ und 10 Gew.-% WO₃;
wurde wie folgt hergestellt:
Kommerziell erhältliches, mit 10 Gew.-% Wolframoxid dotiertes Titandioxid (Anatas) in Pulverform wurde in einem Behälter vorgelegt. Sodann wurde unter ständiger Durchmischung in Oxalsäure gelöstes Ammoniummetavanadat in der entsprechenden Menge langsam zugegeben. Das so erhaltene Pulver wurde bei 110°C getrocknet und anschließend bei 600°C für 6 Stunden kalziniert.

### C) Katalysatorpulver C der Zusammensetzung

79,4 Gew.-% TiO₂ als Träger, 1,8 Gew.-% V₂O₅, 10 Gew.-% WO₃ und 8.8 Gew.-% SiO₂
wurde wie folgt hergestellt:
Kommerziell erhältliches, mit 10 Gew.-% SiO₂ dotiertes Titandioxid in Pulverform (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### D) Katalysatorpulver D der Zusammensetzung

78,5 Gew.-% TiO₂ als Träger, 1,8 Gew.-% V₂O₅, 10 Gew.-% WO₃ und 9.7 Gew.-% SiO₂
wurde wie folgt hergestellt:
Kommerziell erhältliches, mit 10 Gew.-% SiO₂ und 9 Gew.-% Wolframoxid dotiertes Titandioxid (Anatas) in Pulverform wurde in einem Behälter vorgelegt. Sodann wurde unter ständiger Durchmischung in Oxalsäure gelöstes Ammoniummetavanadat in der entsprechenden Menge langsam zugegeben. Das so erhaltene Pulver wurde bei 110°C getrocknet und anschließend bei 600°C für 6 Stunden kalziniert.

### Beispiel 1

a) Zur Herstellung eines erfindungsgemäßen Katalysators wurde Katalysatorpulver A in Wasser aufgeschlämmt und in üblicher Weise auf ein handelsübliches Durchflusssubstrat auf dessen gesamte Länge beschichtet. Sodann wurde bei 110°C getrocknet und für 6 Stunden bei 600°C kalziniert. Die Washcoat-Beladung betrug 210 g/l
b) Sodann wurde Katalysatorpulver C in Wasser aufgeschlämmt und in üblicher Weise auf das gemäß vorstehendem Schritt a) erhaltene, mit Katalysatorpulver A beschichtete Durchflusssubstrat auf dessen gesamter Länge beschichtet. Wieder wurde bei 110°C getrocknet und und für 6 Stunden bei 600°C kalziniert. Die Washcoat-Beladung der zweiten Schicht betrug 70 g/l

Der so erhaltene erfindungsgemäße Katalysator wird nachstehend als K1 bezeichnet.

### Beispiel 2

Katalysatorpulver D wurde in Wasser aufgeschlämmt und in üblicher Weise auf das gemäß Beispiel 1a) erhaltene, mit Katalysatorpulver A beschichtete Durchflusssubstrat auf dessen gesamter Länge beschichtet. Wieder wurde bei 110°C getrocknet und für 6 Stunden bei 600°C kalziniert. Die Washcoat-Beladung der zweiten Schicht betrug 70 g/l

Der so erhaltene erfindungsgemäße Katalysator wird nachstehend als K2 bezeichnet.

### Beispiel 3

a) Zur Herstellung eines erfindungsgemäßen Katalysators wurde Katalysatorpulver B in Wasser aufgeschlämmt und in üblicher Weise auf ein handelsübliches Durchflusssubstrat auf dessen gesamte Länge beschichtet. Sodann wurde bei 110°C getrocknet und für 6 Stunden bei 600°C kalziniert. Die Washcoat-Beladung betrug 210 g/l.
b) Sodann wurde Katalysatorpulver C in Wasser aufgeschlämmt und in üblicher Weise auf das gemäß vorstehendem Schritt a) erhaltene, mit Katalysatorpulver B beschichtete Durchflusssubstrat auf dessen gesamter Länge beschichtet. Wieder wurde bei 110°C getrocknet und für 6 Stunden bei 600°C kalziniert. Die Washcoat-Beladung der zweiten Schicht betrug 70 g/l.

Der so erhaltene erfindungsgemäße Katalysator wird nachstehend als K3 bezeichnet.

### Beispiel 4

Katalysatorpulver D wurde in Wasser aufgeschlämmt und in üblicher Weise auf das gemäß Beispiel 3a) erhaltene, mit Katalysatorpulver B beschichtete Durchflusssubstrat auf dessen gesamter Länge beschichtet. Wieder wurde bei 110°C getrocknet und für 6 Stunden bei 600°C kalziniert. Die Washcoat-Beladung der zweiten Schicht betrug 70 g/l.

Der so erhaltene erfindungsgemäße Katalysator wird nachstehend als K4 bezeichnet.

### Beispiel 5

a) Zur Herstellung eines erfindungsgemäßen Katalysators wurde Katalysatorpulver A in Wasser aufgeschlämmt und in üblicher Weise auf ein handelsübliches Durchflusssubstrat ausgehend von einer Seite auf einer Länge von 75% seiner Gesamtlänge beschichtet. Sodann wurde bei 110°C getrocknet und für 6 Stunden bei 600°C kalziniert. Die Washcoat-Beladung betrug 280 g/l.
b) Sodann wurde Katalysatorpulver C in Wasser aufgeschlämmt und in üblicher Weise auf das gemäß vorstehendem Schritt a) erhaltene, mit Katalysatorpulver A beschichtete Durchflusssubstrat auf die verbleibenden 25% der Gesamtlänge beschichtet. Wieder wurde bei 110°C getrocknet und für 6 Stunden bei 600°C kalziniert. Die Washcoat-Beladung der zweiten Schicht betrug 280 g/l.

Der so erhaltene erfindungsgemäße Katalysator wird nachstehend als K5 bezeichnet.

### Beispiel 6

Katalysatorpulver D wurde in Wasser aufgeschlämmt und in üblicher Weise auf das gemäß Beispiel 5a) erhaltene, auf 75% seiner Länge mit Katalysatorpulver A beschichtete Durchflusssubstrat auf die verbleibenden 25% der Gesamtlänge beschichtet. Wieder wurde bei 110°C getrocknet und für 6 Stunden bei 600°C kalziniert. Die Washcoat-Beladung der zweiten Schicht betrug 280 g/l.

Der so erhaltene erfindungsgemäße Katalysator wird nachstehend als K6 bezeichnet.

### Beispiel 7

a) Zur Herstellung eines erfindungsgemäßen Katalysators wurde Katalysatorpulver B in Wasser aufgeschlämmt und in üblicher Weise auf ein handelsübliches Durchflusssubstrat ausgehend von einer Seite auf einer Länge von 75% seiner Gesamtlänge beschichtet. Sodann wurde bei 110°C getrocknet und für 6 Stunden bei 600°C kalziniert. Die Washcoat-Beladung betrug 280 g/l.
b) Sodann wurde Katalysatorpulver C in Wasser aufgeschlämmt und in üblicher Weise auf das gemäß vorstehendem Schritt a) erhaltene, mit Katalysatorpulver A beschichtete Durchflusssubstrat auf die verbleibenden 25% der Gesamtlänge beschichtet. Wieder wurde bei 110°C getrocknet und für 6 Stunden bei 600°C kalziniert. Die Washcoat-Beladung der zweiten Schicht betrug 280 g/l.

Der so erhaltene erfindungsgemäße Katalysator wird nachstehend als K7 bezeichnet.

### Beispiel 8

Katalysatorpulver D wurde in Wasser aufgeschlämmt und in üblicher Weise auf das gemäß Beispiel 7a) erhaltene, auf 75% seiner Länge mit Katalysatorpulver B beschichtete Durchflusssubstrat auf die verbleibenden 25% der Gesamtlänge beschichtet. Wieder wurde bei 110°C getrocknet und für 6 Stunden bei 600°C kalziniert. Die Washcoat-Beladung der zweiten Schicht betrug 280 g/l.

Der so erhaltene erfindungsgemäße Katalysator wird nachstehend als K8 bezeichnet.

### Vergleichsbeispiel 1

In Analogie zu Beispiel 1a wird ein handelsübliches Durchflusssubstrat über die gesamte Länge mit Katalysatorpulver A in einer Menge von 280g/l beschichtet.

Der erhaltene Katalysator wird nachfolgend als VK1 bezeichnet.

### Vergleichsbeispiel 2

In Analogie zu Beispiel 3a wird ein handelsübliches Durchflusssubstrat über die gesamte Länge mit Katalysatorpulver B in einer Menge von 280g/l beschichtet.

Der erhaltene Katalysator wird nachfolgend als VK2 bezeichnet.

### Vergleichsbeispiel 3

Zur Herstellung eines Vergleichskatalysators wurde Katalysatorpulver C in Wasser aufgeschlämmt und in üblicher Weise auf ein handelsübliches Durchflusssubstrat auf dessen gesamte Länge beschichtet. Sodann wurde bei 110°C getrocknet und für 6 Stunden bei 600°C kalziniert. Die Washcoat-Beladung betrug 280g/l.

Der so erhaltene Katalysator wird nachstehend als VK3 bezeichnet.

### Vergleichsbeispiel 4

Zur Herstellung eines Vergleichskatalysators wurde Katalysatorpulver D in Wasser aufgeschlämmt und in üblicher Weise auf ein handelsübliches Durchflusssubstrat auf dessen gesamte Länge beschichtet. Sodann wurde bei 110°C getrocknet und für 6 Stunden bei 600°C kalziniert. Die Washcoat-Beladung betrug 280g/l.

Der so erhaltene Katalysator wird nachstehend als VK4 bezeichnet.

Vor der Testung der Katalysatoren gemäß Beispielen 1 bis 8 und Vergleichsbeispielen 1 bis 4, wurden diese zunächst 100 Stunden bei 580°C in einer Gasatmosphäre (10% O₂, 10% H₂O, Rest N₂) hydrothermal gealtert.

Im Falle der Schichtkatalysatoren der Beispiele 1 bis 4 wurden zur Bestimmung der NO-Umsätze der gealterten Katalysatoren in einem Reaktor aus Quartzglas Bohrkerne mit L = 3" und D = 1% zwischen 150 und 540°C unter Stationärbedingungen getestet (GHSV = 30000 1/h, Synthesegaszusammensetzung: 500 ppm NO, 450 ppm NH₃ (α = xNH3 / xNOx = 0,9; xNOx = xNO + xNO2, wobei x jeweils Konzentration bedeutet), 5% O2, 5% H₂O, Rest N2.

Die NO-Umsätze der zonierten Katalysatoren der Beispiele 5 bis 8 wurden in analoger Weise bestimmt, wobei Bohrkerne verwendet wurden, die die beiden Zonen im gleichen Längenverhältnis wie im ursprünglich beschichteten Substrat aufwiesen.

Folgende NO-Umsätze in %, normiert auf α, wurden erhalten:

| | Temperatur [°C] | | | | | | | | | |
|---|---|---|---|---|---|---|---|---|---|---|
| | 150 | 175 | 200 | 250 | 300 | 350 | 400 | 450 | 500 | 550 |
| K1 | 7 | 18 | 42 | 97 | 100 | 100 | 100 | 99 | 93 | 73 |
| K2 | 6 | 15 | 34 | 90 | 100 | 100 | 100 | 99 | 92 | 64 |
| K3 | 9 | 21 | 44 | 95 | 99 | 100 | 100 | 99 | 90 | 63 |
| K4 | 8 | 19 | 41 | 92 | 98 | 99 | 99 | 97 | 86 | 50 |
| K5 | 7 | 17 | 37 | 90 | 100 | 100 | 100 | 100 | 90 | 64 |
| K6 | 7 | 17 | 37 | 89 | 100 | 100 | 100 | 99 | 89 | 61 |
| K7 | 8 | 18 | 39 | 91 | 100 | 100 | 100 | 99 | 85 | 54 |
| K8 | 7 | 19 | 40 | 92 | 100 | 100 | 100 | 99 | 85 | 52 |
| VK1 | 8 | 21 | 43 | 92 | 99 | 100 | 100 | 96 | 73 | 18 |
| VK2 | 8 | 21 | 44 | 95 | 100 | 100 | 100 | 95 | 66 | -3 |
| VK3 | 4 | 11 | 27 | 78 | 97 | 99 | 99 | 98 | 95 | 84 |
| VK4 | 4 | 9 | 24 | 70 | 93 | 96 | 96 | 96 | 93 | 82 |

### Beispiele 9 bis 20

Zur Herstellung weiterer erfindungsgemäßer Katalysatoren wurden nachstehende Katalysatorpulver verwendet:

### E) Katalysatorpulver E der Zusammensetzung

87,8 Gew.-% TiO₂ als Träger, 3,5 Gew.-% V₂O₅, 4,5 Gew.-% WO₃ und 4,6 Gew.-% SiO₂
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### F) Katalysatorpulver F der Zusammensetzung

92,0 Gew.-% TiO₂ als Träger, 3,0 Gew.-% V₂O₅ und 5 Gew.-% WO₃;
wurde wie folgt hergestellt:
Kommerziell erhältliches Titandioxid (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### G) Katalysatorpulver G der Zusammensetzung

92,5 Gew.-% TiO₂ als Träger, 2,5 Gew.-% V₂O₅ und 5 Gew.-% WO₃;
wurde wie folgt hergestellt:
Kommerziell erhältliches Titandioxid (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### H) Katalysatorpulver H der Zusammensetzung

91,5 Gew.-% TiO₂ als Träger, 2,5 Gew.-% V₂O₅, 5 Gew.-% WO₃ und 1 Gew.-% Silber
wurde wie folgt hergestellt:
Kommerziell erhältliches Titandioxid (Anatas) in Pulverform wurde in einem Behälter vorgelegt. Sodann wurden unter ständiger Durchmischung wässrige Lösungen Ammoniummetawolframat und Silberacetat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.Das so erhaltene Pulver wurde bei 110°C getrocknet und anschließend bei 600°C für 6 Stunden kalziniert.

### I) Katalysatorpulver I der Zusammensetzung

92,0 Gew.-% TiO₂ als Träger, 2,5 Gew.-% V₂O₅, 5 Gew.-% WO₃ und 0,5 Gew.-% MnO
wurde wie folgt hergestellt:
Kommerziell erhältliches Titandioxid (Anatas) in Pulverform wurde in einem Behälter vorgelegt. Sodann wurden unter ständiger Durchmischung wässrige Lösungen von Manganacetat und Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### J) Katalysatorpulver J der Zusammensetzung

74,9 Gew.-% TiO₂ als Träger, 4,0 Gew.-% V₂O₅, 8,3 Gew.-% WO₃, 9,3 Gew.-% SiO₂ und 3,5 Gew.-% Fe₂O₃
wurde wie folgt hergestellt:
Kommerziell erhältliches, mit 5 Gew.-% SiO₂ dotiertes Titandioxid (Anatas) in Pulverform wurde in einem Behälter vorgelegt und intensiv mit der entsprechenden Menge Eisenvanadat vermischt. Sodann wurde unter ständiger Durchmischung eine wässrige Lösung von Ammoniummetawolframat in der entsprechenden Menge langsam zugegeben. Das so erhaltene Pulver wurde bei 110°C getrocknet und anschließend bei 600°C für 6 Stunden kalziniert.

### K) Katalysatorpulver K der Zusammensetzung

88,6 Gew.-% TiO₂ als Träger, 1,6 Gew.-% V₂O₅, 5,0 Gew.-% WO₃, 4,3 Gew.-% SiO₂ und 0,5 Gew.-% CuO
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurden unter ständiger Durchmischung wässrige Lösungen von Ammoniummetawolframat und Kupferacetat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### L) Katalysatorpulver L der Zusammensetzung

87,2 Gew.-% TiO₂ als Träger, 1,6 Gew.-% V₂O₅, 5,0 Gew.-% WO₃, 4,2 Gew.-% SiO₂ und 2,0 Gew.-% Nb₂O₅
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurden unter ständiger Durchmischung wässrige Lösungen von Ammoniummetawolframat und Ammoniumnioboxalat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### M) Katalysatorpulver M der Zusammensetzung

87,2 Gew.-% TiO₂ als Träger, 1,6 Gew.-% V₂O₅, 5,0 Gew.-% WO₃, 4,2 Gew.-% SiO₂ und 2,0 Gew.-% MoO₃
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurden unter ständiger Durchmischung wässrige Lösungen Ammoniummetawolframat und Ammoniummolybdat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### N) Katalysatorpulver N der Zusammensetzung

88,8 Gew.-% TiO₂ als Träger, 1,5 Gew.-% V₂O₅, 5,0 Gew.-% WO₃ und 4,7 Gew.-% SiO₂
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurde unter ständiger Durchmischung eine wässrige Lösung von Ammoniummetawolframat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### O) Katalysatorpulver O der Zusammensetzung

75,8 Gew.-% TiO₂ als Träger, 2,1 Gew.-% V₂O₅, 8,4 Gew.-% WO₃ und 9,4 Gew.-% SiO₂ und 4,3 Gew.-% CeO₂
wurde wie folgt hergestellt:
Kommerziell erhältliches, mit 10 Gew.-% SiO₂ und 9 Gew.-% WO₃ dotiertes Titandioxid (Anatas) in Pulverform wurde in einem Behälter vorgelegt. Sodann wurden unter ständiger Durchmischung wässrige Lösungen von Ammoniummetawolframat und Ceracetat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

### P) Katalysatorpulver P der Zusammensetzung

65,1 Gew.-% TiO₂ als Träger, 3,2 Gew.-% V₂O₅, 7,2 Gew.-% WO₃, 8,0 Gew.-% SiO₂, 2,8 Gew.-% Fe₂O₃ und 13,6 Gew.-% Er₂O₃
wurde wie folgt hergestellt:
Kommerziell erhältliches, mit 10 Gew.-% SiO₂ und 9 Gew.-% WO₃ dotiertes Titandioxid (Anatas) in Pulverform wurde in einem Behälter vorgelegt und intensiv mit der entsprechenden Menge Eisenerbiumvanadat vermischt. Sodann wurde unter ständiger Durchmischung eine wässrige Lösung von Ammoniummetawolframat in der entsprechenden Menge langsam zugegeben. Das so erhaltene Pulver wurde bei 110°C getrocknet und anschließend bei 600°C für 6 Stunden kalziniert.

### Q) Katalysatorpulver Q der Zusammensetzung

87,7 Gew.-% TiO₂ als Träger, 1,6 Gew.-% V₂O₅, 5,0 Gew.-% WO₃, 4,2 Gew.-% SiO₂ und 1,5 Gew.-% Sb₂O₅
wurde wie folgt hergestellt:
Kommerziell erhältliches, mit 5 Gew.-% SiO₂ dotiertes Titandioxid (Anatas) in Pulverform wurde in einem Behälter vorgelegt. Sodann wurden unter ständiger Durchmischung wässrige Lösungen von Ammoniummetawolframat und Antimonacetat und in Oxalsäure gelöstes Ammoniummetavanadat in den entsprechenden Mengen langsam zugegeben. Das so erhaltene Pulver wurde bei 110°C getrocknet und anschließend bei 600°C für 6 Stunden kalziniert.

In analoger Weise wie in den Beispielen 1 bis 4 beschrieben wurden unter Verwendung der Katalysatorpulver E bis Q die erfindungsgemäßen Schichtkatalysatoren der Beispiele 9 bis 20 gemäß nachstehender Tabelle erhalten.

| Beispiel | untere Schicht (direkt auf dem Substrat) | obere Schicht (auf der unteren Schicht) |
|---|---|---|
| 9 | 120g/l Katalysatorpulver E | 40g/l Katalysatorpulver N |
| 10 | 140g/l Katalysatorpulver E | 20g/l Katalysatorpulver N |
| 11 | 120g/l Katalysatorpulver F | 40g/l Katalysatorpulver N |
| 12 | 120g/l Katalysatorpulver H | 40g/l Katalysatorpulver N |
| 13 | 120g/l Katalysatorpulver E | 40g/l Katalysatorpulver O |
| 14 | 120g/l Katalysatorpulver L | 40g/l Katalysatorpulver N |
| 15 | 120g/l Katalysatorpulver J | 40g/l Katalysatorpulver D |
| 16 | 120g/l Katalysatorpulver E | 40g/l Katalysatorpulver P |
| 17 | 120g/l Katalysatorpulver I | 40g/l Katalysatorpulver N |
| 18 | 120g/l Katalysatorpulver K | 40g/l Katalysatorpulver N |
| 19 | 120g/l Katalysatorpulver M | 40g/l Katalysatorpulver N |
| 20 | 120g/l Katalysatorpulver Q | 40g/l Katalysatorpulver N |

Zur Herstellung der Vergleichsbeispiele 5 bis 12 wurden je ein handelsübliches Durchflusssubstrat über die gesamte Länge in einer Menge von 160g/l mit Katalysatorpulver E, N, F, H, O, P, I bzw. K beschichtet. Die so erhaltenen Katalysatoren werden nachfolgend als
VK5 (enthaltend Katalysatorpulver E),
VK6 (enthaltend Katalysatorpulver N),
VK7 (enthaltend Katalysatorpulver F) und
VK8 (enthaltend Katalysatorpulver H)
VK9 (enthaltend Katalysatorpulver O)
VK10 (enthaltend Katalysatorpulver P)
VK11 (enthaltend Katalysatorpulver I)
VK12 (enthaltend Katalysatorpulver K)
bezeichnet.

Die NO-Umsätze der frischen Katalysatoren gemäß Beispielen 10, 11, 12, 13, 16, 17 und 18 (nachfolgend als K10, K11, K12, K13, K16, K17 bzw. K18 bezeichnet), sowie der Vergleichskatalysatoren VK5 bis VK12 wurden wie oben beschrieben bestimmt.

Folgende NO-Umsätze in %, normiert auf α, wurden erhalten:

| | Temperatur [°C] | | | | | | | | | |
|---|---|---|---|---|---|---|---|---|---|---|
| | 150 | 175 | 200 | 250 | 300 | 350 | 400 | 450 | 500 | 540 |
| K10 | 4 | 10 | 23 | 71 | 97 | 99 | 99 | 98 | 93 | 76 |
| K11 | 4 | 11 | 26 | 79 | 100 | 100 | 100 | 100 | 95 | 75 |
| K12 | 2 | 6 | 15 | 54 | 92 | 98 | 97 | 95 | 86 | 56 |
| K13 | 5 | 14 | 32 | 78 | 89 | 90 | 90 | 89 | 84 | 65 |
| K16 | 7 | 17 | 38 | 89 | 99 | 100 | 100 | 98 | 93 | 69 |
| K17 | 3 | 8 | 20 | 68 | 98 | 100 | 100 | 99 | 95 | 75 |
| K18 | 2 | 3 | 8 | 37 | 84 | 96 | 97 | 98 | 95 | 82 |
| VK5 | 6 | 16 | 35 | 86 | 99 | 100 | 100 | 98 | 88 | 58 |
| VK6 | 2 | 3 | 8 | 34 | 81 | 98 | 99 | 99 | 97 | 90 |
| VK7 | 7 | 16 | 36 | 89 | 99 | 99 | 99 | 97 | 86 | 50 |
| VK8 | 3 | 7 | 18 | 57 | 90 | 96 | 95 | 90 | 73 | 23 |
| VK9 | 2 | 6 | 15 | 53 | 91 | 98 | 99 | 98 | 95 | 78 |
| VK10 | 1 | 4 | 10 | 41 | 83 | 97 | 98 | 97 | 92 | 71 |
| VK11 | 3 | 7 | 17 | 61 | 95 | 99 | 99 | 98 | 94 | 73 |
| VK12 | 2 | 4 | 10 | 41 | 85 | 97 | 98 | 98 | 89 | 62 |

### R) Katalysatorpulver R der Zusammensetzung

77,1 Gew.-% TiO₂ als Träger, 3,61 Gew.-% V₂O₅, 11,17 Gew.-% WO₃ und 8,12 Gew.-% SiO₂ wurde wie folgt hergestellt:
Eine Mischung aus 11,29 Gew.-% eines reinen, kommerziell erhältlichen Titandioxids (Anatas) und 81,23 Gew.-% eines kommerziell erhältlichen, mit 10 Gew.-% SiO₂ und 9 Gew.-% WO₃ dotierten Titandioxids (Anatas) wurde in einem Behälter vorgelegt. Sodann wurden unter ständiger Durchmischung wässrige Lösungen von Ammoniummetawolframat (3,86 Gew.-% berechnet als WO₃) und Ammoniummetavanadat (3,61 Gew.-% berechnet als V₂O₅) langsam zugegeben. Das so erhaltene Pulver wurde bei 110°C getrocknet und anschließend bei 600°C für 6 Stunden kalziniert.

### S) Katalysatorpulver S der Zusammensetzung

73,02 Gew.-% TiO₂ als Träger, 3,42 Gew.-% V₂O₅, 15,87 Gew.-% WO₃ und 7,69 Gew.-% SiO₂ wurde wie folgt hergestellt:
Eine Mischung aus 10,70 Gew.-% eines reinen, kommerziell erhältlichen Titandioxids (Anatas) und 76,94 Gew.-% eines kommerziell erhältlichen, mit 10 Gew.-% SiO₂ und 9 Gew.-% WO₃ dotierten Titandioxids (Anatas) wurde in einem Behälter vorgelegt. Sodann wurden unter ständiger Durchmischung wässrige Lösungen von Ammoniummetawolframat (8,95 Gew.-% berechnet als WO₃) und Ammoniummetavanadat (3,42 Gew.-% berechnet als V₂O₅) langsam zugegeben. Das so erhaltene Pulver wurde bei 110°C getrocknet und anschließend bei 600°C für 6 Stunden kalziniert.

### Beispiel 21

a) Zur Herstellung eines erfindungsgemäßen Katalysators wurde Katalysatorpulver S in Wasser aufgeschlämmt und in üblicher Weise auf ein handelsübliches Durchflusssubstrat mit einer Länge von 3.0" ausgehend von einer Seite auf einer Länge von 1.2" d.h. 40% seiner Gesamtlänge beschichtet. Sodann wurde bei 110°C getrocknet und für 6 Stunden bei 600°C kalziniert. Die Washcoat-Beladung betrug 160 g/l.
b) Sodann wurde Katalysatorpulver R in Wasser aufgeschlämmt und in üblicher Weise auf das gemäß vorstehendem Schritt a) erhaltene, mit Katalysatorpulver S beschichtete Durchflusssubstrat auf die verbleibenden 60% der Gesamtlänge beschichtet. Wieder wurde bei 110°C getrocknet und für 6 Stunden bei 600°C kalziniert. Die Washcoat-Beladung der zweiten Schicht betrug ebenfalls 160 g/l.

Der so erhaltene erfindungsgemäße Katalysator wird nachstehend als K13 bezeichnet.

### Vergleichsbeispiel 13

a) Zur Herstellung eines Vergleichskatalysators wurde Katalysatorpulver R in Wasser aufgeschlämmt und in üblicher Weise auf ein handelsübliches Durchflusssubstrat mit einer Länge von 3.0" ausgehend von einer Seite auf einer Länge von 1.2" d.h. 40% seiner Gesamtlänge beschichtet. Sodann wurde bei 110°C getrocknet und für 6 Stunden bei 600°C kalziniert. Die Washcoat-Beladung betrug 160 g/l.
b) Sodann wurde Katalysatorpulver S in Wasser aufgeschlämmt und in üblicher Weise auf das gemäß vorstehendem Schritt a) erhaltene, mit Katalysatorpulver R beschichtete Durchflusssubstrat auf die verbleibenden 60% der Gesamtlänge beschichtet. Wieder wurde bei 110°C getrocknet und für 6 Stunden bei 600°C kalziniert. Die Washcoat-Beladung der zweiten Schicht betrug ebenfalls 160 g/l.

Der so erhaltene Katalysator wird nachstehend als VK13 bezeichnet.

In VK13 ist der Anteil an V₂O₅ in Schicht A (in Schritt a) hergestellte Schicht) in Gew.-% bezogen auf das Gesamtgewicht der Schicht A kleiner als der Anteil an V₂O₅ in Schicht B (in Schritt b) hergestellte Schicht) in Gew.-% bezogen auf das Gesamtgewicht der Schicht B. VK13 entspricht insoweit Beispiel 2 der US2013/205743.

Die NO-Umsätze der frischen Katalysatoren K13 und VK15 wurden wie oben beschrieben bestimmt.

Folgende NO-Umsätze in %, normiert auf α, wurden erhalten:

| | Temperatur [°C] | | | | | | | | | |
|---|---|---|---|---|---|---|---|---|---|---|
| | 150 | 175 | 200 | 250 | 300 | 350 | 400 | 450 | 500 | 540 |
| K13 | 6 | 16 | 38 | 94 | 99 | 99 | 99 | 98 | 90 | 62 |
| VK13 | 6 | 15 | 35 | 93 | 100 | 100 | 100 | 98 | 85 | 44 |

## Patentansprüche

1. Katalysator zur selektiven Reduktion von Stickoxiden umfassend zwei katalytisch aktive Schichten A und B, wobei
A ein Trägeroxid, sowie die Komponenten A1 und A2 und
B ein Trägeroxid, sowie die Komponenten B1, B2 und B3, enthält, wobei
A1 und B1 für mindestens ein Oxid des Vanadiums,
A2 und B2 für mindestens ein Oxid des Wolframs und
B3 für mindestens ein Oxid des Siliziums
stehen, **dadurch gekennzeichnet, dass**
• der Anteil an Komponente A1 in Schicht A in Gew.-% bezogen auf das Gesamtgewicht der Schicht A größer ist als der Anteil an Komponente B1 in Schicht B in Gew.-% bezogen auf das Gesamtgewicht der Schicht B und
• der Anteil der Schicht A in Gew.-% bezogen auf das Gesamtgewicht der Schichten A und B größer ist als der Anteil der Schicht B.

2. Katalysator gemäß Anspruch 1, **dadurch gekennzeichnet, dass** Schicht A neben den Komponenten A1 und A2 eine Komponente A3 enthält, wobei A3 für mindestens ein Oxid des Siliziums steht und wobei der Anteil an Komponente A3 in Schicht A in Gew.-% bezogen auf das Gesamtgewicht der Schicht A kleiner ist als der Anteil an Komponente B3 in Schicht B in Gew.-% bezogen auf das Gesamtgewicht der Schicht B.

3. Katalysator gemäß Anspruch 1, **dadurch gekennzeichnet, dass** er mindestens zwei katalytisch aktive Schichten A und B umfasst, wobei
A ein Trägeroxid, Vanadiumpentoxid als Komponente A1 und Wolframtrioxid als Komponente A2 und
B ein Trägeroxid, Vanadiumpentoxid als Komponente B1, Wolframtrioxid als Komponente B2 und Siliziumdioxid als Komponente B3
enthalten, **dadurch gekennzeichnet, dass**
• der Anteil an Vanadiumpentoxid in Schicht A in Gew.-% bezogen auf das Gesamtgewicht der Schicht A größer ist als der Anteil an Vanadiumpentoxid in Schicht B in Gew.-% bezogen auf das Gesamtgewicht der Schicht B und
• der Anteil der Schicht A in Gew.-% bezogen auf das Gesamtgewicht der Schichten A und B größer ist als der Anteil der Schicht B.

4. Katalysator gemäß einem oder mehreren der Ansprüche 1 bis 3, **dadurch gekennzeichnet, dass** der Anteil an Komponente A2 in Schicht A und an Komponente B2 in Schicht B in Gew.-% jeweils bezogen auf das Gesamtgewicht der Schicht A bzw. B gleich ist oder der Anteil an Komponente A2 in Schicht A in Gew.-% bezogen auf das Gesamtgewicht der Schicht A kleiner ist als der Anteil an Komponente B2 in Schicht B in Gew.-% bezogen auf das Gesamtgewicht der Schicht B.

5. Katalysator gemäß einem oder mehreren der Ansprüche 1 bis 4, **dadurch gekennzeichnet, dass** der Anteil der Komponente A1 berechnet als Vanadiumpentoxid 1,5 bis 5 Gew.-%, insbesondere 2 bis 4 Gew.-%, bezogen auf das Gesamtgewicht der Schicht A, beträgt.

6. Katalysator gemäß einem oder mehreren der Ansprüche 1 bis 5, **dadurch gekennzeichnet, dass** der Anteil der Komponente B1 berechnet als Vanadiumpentoxid 1 bis 4 Gew.-%, insbesondere1,5 bis 3,5 Gew.-%, bezogen auf das Gesamtgewicht der Schicht B, beträgt.

7. Katalysator gemäß einem oder mehreren der Ansprüche 1 bis 6, **dadurch gekennzeichnet, dass** der Anteil an Komponente A2, bezogen auf das Gesamtgewicht der Schicht A und der Anteil an Komponente B2, bezogen auf das Gesamtgewicht der Schicht B, gleich sind und berechnet als Wolframtrioxid 3 bis 12, bevorzugt 4,5 bis 10 Gew.-%, beträgt.

8. Katalysator gemäß einem oder mehreren der Ansprüche 1 bis 6, **dadurch gekennzeichnet, dass** der Anteil an Komponente A2, bezogen auf das Gesamtgewicht der Schicht A kleiner ist als der Anteil an Komponente B2, bezogen auf das Gesamtgewicht der Schicht B, und berechnet als Wolframtrioxid 3 bis 5,5, bevorzugt 4,5 bis 5 Gew.-% beträgt, wobei der Anteil an Komponente B2, bezogen auf das Gesamtgewicht der Schicht B, 4,5 bis 12, bevorzugt 5 bis 10 Gew.%, beträgt.

9. Katalysator gemäß einem oder mehreren der Ansprüche 1 bis 8, **dadurch gekennzeichnet, dass** der Anteil an Komponente B3, bezogen auf das Gesamtgewicht der Schicht B und berechnet als Siliziumdioxid, 3 bis 12, bevorzugt 3,5 bis 10 Gew.-%, beträgt.

10. Katalysator gemäß einem oder mehreren der Ansprüche 1 bis 9, **dadurch gekennzeichnet, dass** der Anteil an Komponente A3, bezogen auf das Gesamtgewicht der Schicht A und berechnet als Siliziumdioxid, 0 bis 5 Gew.% beträgt.

11. Katalysator gemäß einem oder mehreren der Ansprüche 1 bis 10, **dadurch gekennzeichnet, dass**
• der Anteil der Komponente A1 berechnet als Vanadiumpentoxid 1,5 bis 5 Gew.-%, bezogen auf das Gesamtgewicht der Schicht A beträgt und
• der Anteil der Komponente B1 berechnet als Vanadiumpentoxid 1 bis 4 Gew.-%, bezogen auf das Gesamtgewicht der Schicht B, beträgt und
• der Anteil an Komponente A2, bezogen auf das Gesamtgewicht der Schicht A und der Anteil an Komponente B2, bezogen auf das Gesamtgewicht der Schicht B, gleich sind und, berechnet als Wolframtrioxid, 3 bis 12 Gew.-% betragen oder
der Anteil an Komponente A2, bezogen auf das Gesamtgewicht der Schicht A, kleiner ist als der Anteil an Komponente B2, bezogen auf das Gesamtgewicht der Schicht B, und berechnet als Wolframtrioxid 3 bis 5,5 Gew.-% beträgt wobei der Anteil an Komponente B2, bezogen auf das Gesamtgewicht der Schicht B, 4,5 bis 12 Gew.% beträgt, und
• der Anteil an Komponente B3, bezogen auf das Gesamtgewicht der Schicht B und berechnet als Siliziumdioxid 3 bis 12 Gew.-% beträgt, wobei die Komponente A3 nicht vorliegt oder ihr Anteil, bezogen auf das Gesamtgewicht der Schicht A und berechnet als Siliziumdioxid, 1 bis 5 Gew.% beträgt.

12. Katalysator gemäß einem oder mehreren der Ansprüche 1 bis 10, **dadurch gekennzeichnet, dass**
• der Anteil der Komponente A1 berechnet als Vanadiumpentoxid 2 bis 4 Gew.-%, bezogen auf das Gesamtgewicht der Schicht A beträgt und
• der Anteil der Komponente B1 berechnet als Vanadiumpentoxid 1,5 bis 3,5 Gew.-%, bezogen auf das Gesamtgewicht der Schicht B beträgt, und
• der Anteil an Komponente A2, bezogen auf das Gesamtgewicht der Schicht A und der Anteil an Komponente B2, bezogen auf das Gesamtgewicht der Schicht B, gleich sind und, berechnet als Wolframtrioxid, 4,5 bis 10 Gew.-% betragen oder
der Anteil an Komponente A2, bezogen auf das Gesamtgewicht der Schicht A, kleiner ist als der Anteil an Komponente B2, bezogen auf das Gesamtgewicht der Schicht B, und berechnet als Wolframtrioxid 4,5 bis 5 Gew-%, beträgt, wobei der Anteil an Komponente B2, bezogen auf das Gesamtgewicht der Schicht B, 5 bis 10 Gew.% beträgt, und
• der Anteil an Komponente B3, bezogen auf das Gesamtgewicht der Schicht B und berechnet als Siliziumdioxid 3,5 bis 10 Gew.-% beträgt, wobei die Komponente A3 nicht vorliegt oder ihr Anteil, bezogen auf das Gesamtgewicht der Schicht A und berechnet als Siliziumdioxid, 1 bis 5 Gew.% beträgt.

13. Katalysator gemäß einem oder mehreren der Ansprüche 1 bis 12, **dadurch gekennzeichnet, dass** die Schichten A und B unabhängig voneinander weitere Komponenten A4 bzw. B4 enthalten, wobei A4 für ein oder mehrere Metalloxide steht, die ausgewählt sind aus der Reihe bestehend aus Oxiden des Kupfers, Eisens, Mangans, Molybdäns, Antimons, Niobs, Silbers, Palladiums, Platins und der Seltenerdelemente und
B4 unabhängig von A4 voneinander für ein oder mehrere Metalloxide steht, die ausgewählt sind aus der Reihe bestehend aus Oxiden des Kupfers, Eisens, Mangans, Molybdäns, Antimons, Niobs, Silbers und der Seltenerdelemente.

14. Katalysator gemäß Anspruch 13, **dadurch gekennzeichnet, dass** der Anteil der Komponente A4, bezogen auf das Gesamtgewicht der Schicht A 0,1 bis 15 Gew.%, beträgt, wobei im Falle von Silber, Platin und Palladium der Anteil jeweils als Metall berechnet ist, und im Falle der übrigen Komponenten der Anteil jeweils als Oxide berechnet ist und zwar als CuO, Fe₂O₃, MnO, MoO₃, Sb₂O₅, Nb₂O₅, CeO₂ bzw. Er₂O₃

15. Katalysator gemäß einem oder mehreren der Ansprüche 1 bis 14, **dadurch gekennzeichnet, dass** das Trägeroxid in Schicht A und/oder B Titandioxid, Zirkoniumdioxid, Aluminiumoxid oder Mischungen davon enthält.

16. Katalysator gemäß einem oder mehreren der Ansprüche 1 bis 15, **dadurch gekennzeichnet, dass** das Trägeroxid in Schicht A und B Titandioxid ist.

17. Katalysator gemäß einem oder mehreren der Ansprüche 1 bis 16, **dadurch gekennzeichnet, dass** die Schichten A und B aufgebracht sind auf einen katalytisch inerten Tragkörper aus keramischem oder metallischem Material, der ein erstes Ende a, ein zweites Ende b und eine Länge L besitzt, die sich zwischen den Enden a und b erstreckt.

18. Katalysator gemäß Anspruch 17, **dadurch gekennzeichnet, dass** der katalytisch inerte Tragkörper ein Durchflusswabenkörper oder ein Wandflussfilter ist.

19. Katalysator gemäß Anspruch 17 und/oder 18, **dadurch gekennzeichnet, dass** Schicht A direkt auf den inerten Tragkörper über dessen gesamte Länge und Schicht B auf Schicht A aufgebracht ist und diese abgasseitig vollständig überdeckt.

20. Katalysator gemäß Anspruch 17 und/oder 18, **dadurch gekennzeichnet, dass** Schicht A ausgehend von Ende a des katalytisch inerten Tragkörpers auf eine Länge La und Schicht B ausgehend von Ende b des katalytisch inerten Tragkörpers auf eine Länge Lb aufgetragen ist, wobei La 50 bis 75% und Lb 25 bis 50% der Länge L betragen und La + Lb = L ist.

21. Katalysator gemäß Anspruch 17 und/oder 18, **dadurch gekennzeichnet, dass** Schicht A und Schicht B auf zwei verschiedene, hintereinander angeordnete katalytisch inerte Tragkörper aufgebracht sind.

22. Katalysator gemäß einem oder mehreren der Ansprüche 1 bis 16, **dadurch gekennzeichnet, dass** Schicht A in Form eines extrudierten Trägers ausgebildet ist, auf den Schicht B in Form einer Beschichtung aufgetragen ist.

23. Verfahren zur Verminderung von Stickoxiden in Abgasen von mager betriebenen Verbrennungsmotoren umfassend die Verfahrensschritte
• Zugabe eines Reduktionsmittels zum Stickoxide enthaltenden Abgas und
• Überleitung des resultierenden Gemisches aus Stickoxide enthaltendem Abgas und Reduktionsmittel über einen Katalysator gemäß einem oder mehreren der Ansprüche 1 bis 22,
• wobei der Katalysator so angeordnet ist, dass das Gemisch aus Stickoxide enthaltendem Abgas und Reduktionsmittel zuerst mit Schicht B in Berührung kommt.

24. Abgasreinigungssystem zur Verminderung von Stickoxiden in Abgasen von mager betriebenen Verbrennungsmotoren, das in Strömungsrichtung des Abgases
- einen Oxidationskatalysator,
- ein Dieselpartikelfilter und
- einen Katalysator gemäß einem oder mehreren der Ansprüche 1 bis 22 oder
- einen Oxidationskatalysator und
- ein Dieselpartikelfilter, auf dem ein Katalysator gemäß einem oder mehreren der Ansprüche 1 bis 16 als Beschichtung vorliegt
umfasst, wobei der Katalysator gemäß einem oder mehreren der Ansprüche 1 bis 16 so angeordnet ist, dass das Stickoxide enthaltende Abgas und zuerst mit Schicht B in Berührung kommt.

25. Verfahren zur Verminderung von Stickoxiden in Abgasen von mager betriebenen Verbrennungsmotoren, **dadurch gekennzeichnet ist, dass** das Abgas über ein Abgasreinigungssystem gemäß Anspruch 24 geleitet wird.

## Claims

1. A catalyst for the selective reduction of nitrogen oxides comprising two catalytically active layers A and B, wherein
A contains a carrier oxide and components A1 and A2, and
B contains a carrier oxide and components B1, B2, and B3,
wherein
A1 and B1 stand for at least one oxide of vanadium,
A2 and B2 stand for at least one oxide of tungsten, and
B3 stands for at least one oxide of silicon,
**characterized in that**
• the proportion of component A1 in layer A in wt.% with respect to the total weight of layer A is greater than the proportion of component B1 in layer B in wt.% with respect to the total weight of layer B, and
• the proportion of layer A in wt.% with respect to the total weight of layers A and B is greater than the proportion of layer B.

2. The catalyst according to claim 1, **characterized in that** layer A contains a component A3 in addition to components A1 and A2, wherein A3 stands for at least one oxide of silicon, and wherein the proportion of component A3 in layer A in wt.% with respect to the total weight of layer A is smaller than the proportion of component B3 in layer B in wt.% with respect to the total weight of layer B.

3. The catalyst according to claim 1, **characterized in that** it comprises at least two catalytically active layers A and B, wherein
A contains a carrier oxide, vanadium pentoxide as component A1, and tungsten trioxide as component A2, and
B contains a carrier oxide, vanadium pentoxide as component B1, tungsten trioxide as component B2, and silicon dioxide as component B3,
**characterized in that**
• the proportion of vanadium pentoxide in layer A in wt.% with respect to the total weight of layer A is greater than the proportion of vanadium pentoxide in layer B in wt.% with respect to the total weight of layer B, and
• the proportion of layer A in wt.% with respect to the total weight of layers A and B is greater than the proportion of layer B.

4. The catalyst according to one or more of claims 1 through 3, **characterized in that** the proportion of component A2 in layer A and component B2 in layer B in wt.% respectively with respect to the total weight of layer A or B is equal, or the proportion of component A2 in layer A in wt.% with respect to the total weight of layer A is smaller than the proportion of component B2 in layer B in wt.% with respect to the total weight of layer B.

5. The catalyst according to one or more of claims 1 through 4, **characterized in that** the proportion of component A1 calculated as vanadium pentoxide amounts to 1.5 to 5 wt.% - in particular, 2 to 4 wt.% - with respect to the total weight of layer A.

6. The catalyst according to one or more of claims 1 to 5, **characterized in that** the proportion of component B1 calculated as vanadium pentoxide amounts to 1 to 4 wt.% - in particular, 1.5 to 3.5 wt.% - with respect to the total weight of layer B.

7. The catalyst according to one or more of claims 1 through 6, **characterized in that** the proportion of component A2 with respect to the total weight of layer A and the proportion of component B2 with respect to the total weight of layer B are equal and, calculated as tungsten trioxide, amount to 3 to 12 - preferably 4.5 to 10 - wt.%.

8. The catalyst according to one or more of claims 1 through 6, **characterized in that** the proportion of component A2 with respect to the total weight of layer A is smaller than the proportion of component B2 with respect to the total weight of layer B and, calculated as tungsten trioxide, amounts to 3 to 5.5 - preferably 4.5 to 5 - wt.%, wherein the proportion of component B2 with respect to the total weight of layer B amounts to 4.5 to 12 - preferably 5 to 10 - wt.%.

9. The catalyst according to one or more of claims 1 through 8, **characterized in that** the proportion of component B3 with respect to the total weight of layer B and calculated as silicon dioxide amounts to 3 to 12 - preferably 3.5 to 10 - wt.%.

10. The catalyst according to one or more of claims 1 through 9, **characterized in that** the proportion of component A3 with respect to the total weight of layer A and calculated as silicon dioxide amounts to 0 to 5 wt.%.

11. The catalyst according to one or more of claims 1 through 10, **characterized in that**
• the proportion of component A1 calculated as vanadium pentoxide amounts to 1.5 to 5 wt.% with respect to the total weight of layer A, and
• the proportion of component B1 calculated as vanadium pentoxide amounts to 1 to 4 wt.% with respect to the total weight of layer B, and
• the proportion of component A2 with respect to the total weight of layer A and the proportion of component B2 with respect to the total weight of layer B are equal and, calculated as tungsten trioxide, amount to 3 to 12 wt.%, or
the proportion of component A2 with respect to the total weight of layer A is smaller than the proportion of component B2 with respect to the total weight of layer B and, calculated as tungsten trioxide, amounts to 3 to 5.5 wt.%, wherein the proportion of component B2 with respect to the total weight of layer B amounts to 4.5 to 12 wt.%, and
• the proportion of component B3 with respect to the total weight of layer B and calculated as silicon dioxide amounts to 3 to 12 wt.%,
wherein component A3 is not present, or its proportion with respect to the total weight of layer A and calculated as silicon dioxide amounts to 1 to 5 wt.%.

12. The catalyst according to one or more of claims 1 through 10, **characterized in that**
• the proportion of component A1 calculated as vanadium pentoxide amounts to 2 to 4 wt.% with respect to the total weight of layer A, and
• the proportion of component B1 calculated as vanadium pentoxide amounts to 1.5 to 3.5 wt.% with respect to the total weight of layer B, and
• the proportion of component A2 with respect to the total weight of layer A and the proportion of component B2 with respect to the total weight of layer B are equal and, calculated as tungsten trioxide, amount to 4.5 to 10 wt.%; or the proportion of component A2 with respect to the total weight of layer A is smaller than the proportion of component B2 with respect to the total weight of layer B and, calculated as tungsten trioxide, amounts to 4.5 to 5 wt.%, wherein the proportion of component B2 with respect to the total weight of layer B amounts to 5 to 10 wt.%, and
• the proportion of component B3 with respect to the total weight of layer B and calculated as silicon dioxide amounts to 3.5 to 10 wt.%, wherein component A3 is not present, or its proportion with respect to the total weight of layer A and calculated as silicon dioxide amounts to 1 to 5 wt.%.

13. The catalyst according to one or more of claims 1 through 12, **characterized in that** layers A and B independently of one another contain additional components A4 and B4 respectively, wherein A4 stands for one or more metal oxides that are selected from the series consisting of oxides of copper, iron, manganese, molybdenum, antimony, niobium, silver, palladium, platinum, and rare earth elements, and
B4, independently of A4, stands for one or more metal oxides that are selected from the series consisting of oxides of copper, iron, manganese, molybdenum, antimony, niobium, silver, and rare earth elements.

14. The catalyst according to claim 13, **characterized in that** the proportion of component A4 with respect to the total weight of layer A amounts to 0.1 to 15 wt.%, wherein, in the case of silver, platinum, and palladium, the proportion is calculated as metal in each case, and, in the case of the remaining components, the proportion is calculated as oxides in each case, namely, as CuO, Fe₂O₃, MnO, MoO₃, Sb₂O₅, Nb₂O₅, CeO₂, or Er₂O₃.

15. The catalyst according to one or more of claims 1 through 14, **characterized in that** the carrier oxide in layer A and/or B contains titanium dioxide, zirconium dioxide, aluminum oxide, or mixtures thereof.

16. The catalyst according to one or more of claims 1 through 15, **characterized in that** the carrier oxide in layer A and B is titanium dioxide.

17. The catalyst according to one or more of claims 1 through 16, **characterized in that** layers A and B are applied to a catalytically inert supporting body made from ceramic or metallic material and having a first end a, a second end b, and a length L, which extends between the ends a and b.

18. The catalyst according to claim 17, **characterized in that** the catalytically inert supporting body is a flow-through honeycomb body or a wall-flow filter.

19. The catalyst according to claim 17 and/or 18, **characterized in that** layer A is applied directly to the inert supporting body across its entire length, and layer B is applied to layer A and completely covers it on the exhaust gas side.

20. The catalyst according to claim 17 and/or 18, **characterized in that** layer A is applied starting from end a of the catalytically inert supporting body to a length La, and layer B is applied starting from end b of the catalytically inert supporting body to a length Lb, wherein La amounts to 50 to 75 % and Lb amounts to 25 to 50 % of the length L, and La + Lb = L.

21. The catalyst according to claim 17 and/or 18, **characterized in that** layer A and layer B are applied to two different catalytically inert supporting bodies arranged in succession.

22. The catalyst according to one or more of claims 1 through 16, **characterized in that** layer A is formed as an extruded carrier to which layer B is applied in the form of a coating.

23. A method for the reduction of nitrogen oxides in exhaust gases of lean-burn internal combustion engines comprising the method steps of
• adding a reducing agent to the exhaust gas containing nitrogen oxides, and
• passing the resulting mixture of exhaust gas containing nitrogen oxides and reducing agent over a catalyst according to one or more of claims 1 through 22,
• wherein the catalyst is arranged such that the mixture of exhaust gas containing nitrogen oxides and reducing agent comes into contact with layer B first.

24. An exhaust gas cleaning system for the reduction of nitrogen oxides in exhaust gases of lean-burn internal combustion engines which, in the direction of flow of the exhaust gas, comprises
- an oxidation catalyst,
- a diesel particulate filter, and
- a catalyst according to one or more of claims 1 through 22, or
- an oxidation catalyst and
- a diesel particulate filter on which a catalyst according to one or more of claims 1 through 16 is present as a coating,
wherein the catalyst according to one or more of claims 1 through 16 is arranged such that the exhaust gas containing nitrogen oxides comes into contact with layer B first.

25. A method for the reduction of nitrogen oxides in exhaust gases of lean-burn internal combustion engines, **characterized in that** the exhaust gas is directed through an exhaust gas cleaning system according to claim 24.

## Revendications

1. Catalyseur pour la réduction sélective d'oxydes d'azote comprenant deux couches A et B actives sur le plan catalytique, dans lequel
A contient un oxyde porteur, ainsi que les composants A1 et A2 et
B contient un oxyde porteur, ainsi que les composants B1, B2 et B3, dans lequel
A1 et B1 représentent au moins un oxyde de vanadium,
A2 et B2 représentent au moins un oxyde de tungstène et
B3 représente au moins un oxyde de silicium,
**caractérisé en ce que**
• la proportion du composant A1 dans la couche A en % en poids par rapport au poids total de la couche A est supérieure à la proportion du composant B1 dans la couche B en % en poids par rapport au poids total de la couche B et
• la proportion de la couche A en % en poids par rapport au poids total des couches A et B est supérieure à la proportion de la couche B.

2. Catalyseur selon la revendication 1, **caractérisé en ce que** - outre les composants A1 et A2 - la couche A contient un composant A3, dans lequel A3 représente au moins un oxyde de silicium et dans lequel la proportion du composant A3 dans la couche A en % en poids par rapport au poids total de la couche A est inférieure à la proportion du composant B3 dans la couche B en % en poids par rapport au poids total de la couche B.

3. Catalyseur selon la revendication 1, **caractérisé en ce qu'**il comprend au moins deux couches A et B actives sur le plan catalytique, dans lequel
A contient un oxyde porteur, le pentoxyde de vanadium en tant que composant A1 et le trioxyde de tungstène en tant que composant A2 et
B contient un oxyde porteur, le pentoxyde de vanadium en tant que composant B1, le trioxyde de tungstène en tant que composant B2 et le dioxyde de silicium en tant que composant B3,
**caractérisé en ce que**
• la proportion du pentoxyde de vanadium dans la couche A en % en poids par rapport au poids total de la couche A est supérieure à la proportion du pentoxyde de vanadium dans la couche B en % en poids par rapport au poids total de la couche B et
• la proportion de la couche A en % en poids par rapport au poids total des couches A et B est supérieure à la proportion de la couche B.

4. Catalyseur selon une ou plusieurs des revendications 1 à 3, **caractérisé en ce que** la proportion du composant A2 dans la couche A et du composant B2 dans la couche B est égale en % en poids, dans chaque cas par rapport au poids total de la couche A ou B ou la proportion du composant A2 dans la couche A en % en poids par rapport au poids total de la couche A est inférieure à la proportion du composant B2 dans la couche B en % en poids par rapport au poids total de la couche B.

5. Catalyseur selon une ou plusieurs des revendications 1 à 4, **caractérisé en ce que** la proportion du composant A1 calculée en tant que pentoxyde de vanadium est de 1,5 à 5 % en poids, en particulier de 2 à 4 % en poids, par rapport au poids total de la couche A.

6. Catalyseur selon une ou plusieurs des revendications 1 à 5, **caractérisé en ce que** la proportion du composant B1 calculée en tant que pentoxyde de vanadium est de 1 à 4 % en poids, en particulier de 1,5 à 3,5 % en poids, par rapport au poids total de la couche B.

7. Catalyseur selon une ou plusieurs des revendications 1 à 6, **caractérisé en ce que** la proportion du composant A2, par rapport au poids total de la couche A et la proportion du composant B2, par rapport au poids total de la couche B, sont égales et sont calculées en tant que trioxyde de tungstène de 3 à 12, de préférence de 4,5 à 10 % en poids.

8. Catalyseur selon une ou plusieurs des revendications 1 à 6, **caractérisé en ce que** la proportion du composant A2, par rapport au poids total de la couche A, est inférieure à la proportion du composant B2 par rapport au poids total de la couche B et calculée en tant que trioxyde de tungstène est de 3 à 5,5, de préférence de 4,5 à 5 % en poids, où la proportion du composant B2 par rapport au poids total de la couche B est de 4,5 à 12, de préférence de 5 à 10 % en poids.

9. Catalyseur selon une ou plusieurs des revendications 1 à 8, **caractérisé en ce que** la proportion du composant B3 par rapport au poids total de la couche B et calculé en tant que dioxyde de silicium, est de 3 à 12, de préférence de 3,5 à 10 % en poids.

10. Catalyseur selon une ou plusieurs des revendications 1 à 9, **caractérisé en ce que** la proportion du composant A3 par rapport au poids total de la couche A et calculé en tant que dioxyde de silicium, est de 0 à 5 % en poids.

11. Catalyseur selon une ou plusieurs des revendications 1 à 10, **caractérisé en ce que**
• la proportion du composant A1 calculée en tant que pentoxyde de vanadium est de 1,5 à 5 % en poids, par rapport au poids total de la couche A et
• la proportion du composant B1 calculée en tant que pentoxyde de vanadium est de 1 à 4 % en poids, par rapport au poids total de la couche B et
• la proportion du composant A2, par rapport au poids total de la couche A et la proportion du composant B2, par rapport au poids total de la couche B, sont identiques et, calculées en tant que trioxyde de tungstène, sont comprises entre 3 et 12 % en poids ou
la proportion du composant A2 par rapport au poids total de la couche A est inférieure à la proportion du composant B2 par rapport au poids total de la couche B et calculée en tant que trioxyde de tungstène est de 3 à 5,5 % en poids et la proportion du composant B2 par rapport au poids total de la couche B est de 4,5 à 12 % en poids et
• la proportion du composant B3, par rapport au poids total de la couche B et calculé en tant que dioxyde de silicium, est de 3 à 12 % en poids,
dans lequel le composant A3 est absent, ou sa proportion, calculée par rapport au poids total de la couche A et calculée en tant que dioxyde de silicium, est de 1 à 5 % en poids.

12. Catalyseur selon une ou plusieurs des revendications 1 à 10, **caractérisé en ce que**
• la proportion du composant A1 calculée en tant que pentoxyde de vanadium est de 2 à 4 % en poids par rapport au poids total de la couche A et
• la proportion du composant B1 calculée en tant que pentoxyde de vanadium est de 1,5 à 3,5 % en poids par rapport au poids total de la couche B et
• la proportion du composant A2, par rapport au poids total de la couche A et la proportion du composant B2, par rapport au poids total de la couche B, sont identiques et, calculées en tant que trioxyde de tungstène, sont de 4,5 à 10 % en poids ou
la proportion du composant A2, par rapport au poids total de la couche A, est inférieure à la proportion du composant B2, par rapport au poids total de la couche B et, calculée en tant que trioxyde de tungstène, est de 4,5 à 5 % en poids, dans lequel la proportion du composant B2, par rapport au poids total de la couche B, est de 5 à 10 % en poids et
• la proportion du composant B3, par rapport au poids total de la couche B et calculée en tant que dioxyde de silicium, est de 3,5 à 10 % en poids, dans lequel le composant A3 n'est pas présent ou sa proportion, par rapport au poids total de la couche A et calculée en tant que dioxyde de silicium, est de 1 à 5 % en poids.

13. Catalyseur selon une ou plusieurs des revendications 1 à 12, **caractérisé en ce que** les couches A et B, indépendamment l'une de l'autre, contiennent d'autres composants A4 ou B4, respectivement, dans lequel A4 représente un ou plusieurs oxydes métalliques qui sont choisis dans le groupe constitué d'oxydes de cuivre, de fer, de manganèse, de molybdène, d'antimoine, de niobium, d'argent, de palladium, de platine et d'éléments des terres rares et
B4 indépendamment de A4 représente un ou plusieurs oxydes métalliques choisis dans le groupe constitué d'oxydes d'éléments de cuivre, de fer, de manganèse, de molybdène, d'antimoine, de niobium, d'argent et d'éléments des terres rares.

14. Catalyseur selon la revendication 13, **caractérisé en ce que** la proportion du composant A4, par rapport au poids total de la couche A, est de 0,1 à 15 % en poids, dans lequel, dans le cas de l'argent, du platine et du palladium, la proportion est calculée respectivement en tant que métal et, dans le cas des autres composants, la proportion est calculée en tant qu'oxyde, à savoir CuO, Fe₂O₃, MnO, MoO₃, Sb₂O₅, Nb₂O₅, CeO₂ ou Er₂O₃

15. Catalyseur selon une ou plusieurs des revendications 1 à 14, **caractérisé en ce que** l'oxyde porteur dans la couche A et/ou B contient du dioxyde de titane, du dioxyde de zirconium, de l'alumine ou des mélanges de ceux-ci.

16. Catalyseur selon une ou plusieurs des revendications 1 à 15, **caractérisé en ce que** l'oxyde porteur dans les couches A et B est du dioxyde de titane.

17. Catalyseur selon une ou plusieurs des revendications 1 à 16, **caractérisé en ce que** les couches A et B sont déposées sur un corps porteur en matériau céramique ou métallique inerte sur le plan catalytique, ayant une première extrémité a, une seconde extrémité b et une longueur L s'étendant entre les extrémités a et b.

18. Catalyseur selon la revendication 17, **caractérisé en ce que** le corps porteur inerte sur le plan catalytique est un corps en nid d'abeille traversé par un écoulement direct ou un filtre d'écoulement de paroi.

19. Catalyseur selon la revendication 17 et/ou 18, **caractérisé en ce que** la couche A est directement appliquée sur le corps porteur inerte sur toute sa longueur et la couche B est appliquée sur la couche A et est complètement recouverte sur le côté échappement.

20. Catalyseur selon la revendication 17 et/ou 18, **caractérisé en ce que** la couche A, à partir de l'extrémité a du corps porteur inerte sur le plan catalytique, est appliquée sur une longueur La et la couche B à partir de l'extrémité b du corps porteur inerte sur le plan catalytique sur une longueur Lb, où La est de 50 à 75 % et Lb est de 25 à 50 % de la longueur L et La + Lb = L.

21. Catalyseur selon la revendication 17 et/ou 18, **caractérisé en ce que** la couche A et la couche B sont appliquées sur deux corps porteurs inertes sur le plan catalytique différents disposés l'un derrière l'autre.

22. Catalyseur selon une ou plusieurs des revendications 1 à 16, **caractérisé en ce que** la couche A est conçue sous la forme d'un support extrudé, sur lequel la couche B est appliquée sous la forme d'un revêtement.

23. Procédé de réduction des oxydes d'azote dans les gaz d'échappement de moteurs à combustion pauvre comprenant les étapes du procédé suivantes
• adjonction d'un agent réducteur aux gaz d'échappement contenant des oxydes d'azote et
• transfert du mélange résultant des gaz d'échappement contenant des oxydes d'azote et de l'agent réducteur par l'intermédiaire d'un catalyseur selon une ou plusieurs des revendications 1 à 22,
• le catalyseur étant disposé de telle sorte que le mélange des gaz d'échappement contenant des oxydes d'azote et de l'agent réducteur entre d'abord en contact avec la couche B.

24. Système de purification des gaz d'échappement pour la réduction des oxydes d'azote dans les gaz d'échappement de moteurs à combustion pauvre, comprenant, dans la direction d'écoulement des gaz d'échappement,
- un catalyseur d'oxydation,
- un filtre à particules diesel et
- un catalyseur selon une ou plusieurs des revendications 1 à 22 ou
- un catalyseur d'oxydation et
- un filtre à particules diesel sur lequel se trouve un catalyseur selon une ou plusieurs des revendications 1 à 16 en tant que revêtement,
dans lequel le catalyseur selon une ou plusieurs des revendications 1 à 16 est disposé de telle sorte que les gaz d'échappement contenant des oxydes d'azote entrent tout d'abord en contact avec la couche B.

25. Procédé de réduction des oxydes d'azote dans les gaz d'échappement de moteurs à combustion pauvre, **caractérisé en ce que** les gaz d'échappement sont dirigés vers un système de purification des gaz d'échappement selon la revendication 24.
